# EUROPÄISCHE PATENTSCHRIFT

(11) **EP 3 337 656 B1**
(45) Veröffentlichungstag und Bekanntmachung des Hinweises auf die Patenterteilung: **09.12.2020**
(21) Anmeldenummer: 16741293.1
(22) Anmeldetag: 15.07.2016
(51) Int. Cl.: B32B 5/18, B29C 65/48, B62D 27/02

(54) **GEKLEBTE ANORDNUNG**
GLUED ARRANGEMENT
ENSEMBLE ASSEMBLÉ PAR COLLAGE

(30) Priorität: 21.08.2015 DE 102015215978
(43) Veröffentlichungstag der Anmeldung: 27.06.2018
(73) Patentinhaber: Bayerische Motoren Werke Aktiengesellschaft, 80809 München (DE)
(72) Erfinder: BUI, Hoang Viet, 80933 München (DE)
(86) Internationale Anmeldenummer: PCT/EP2016/066878
(87) Internationale Veröffentlichungsnummer: WO 2017/032507

(56) Entgegenhaltungen:
- DE-A1- 10 347 652
- DE-A1-102004 009 880
- US-A1- 2003 113 724

## Beschreibung

Vorliegende Erfindung betrifft eine geklebte Anordnung, vorzugsweise für ein Kraftfahrzeug. Im Detail wird die Klebstoffschicht zwischen zwei Bauteilen beschrieben.

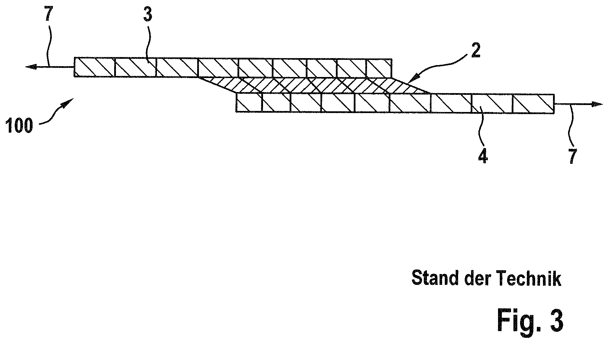

Figur 3 zeigt in rein schematischer Darstellung eine vorbekannte geklebte Anordnung 100 mit zwei Bauteilen 3, 4 und einer Klebstoffschicht 2 zum Verbinden der beiden Bauteile 3, 4. Die Anordnung 100 ist mit einer Kraft 7 zur Überprüfung der Zugscherfestigkeit belastet. Zur Erläuterung der auftretenden Problematik sind die Bauteile 3, 4 und die Klebstoffschicht 2 in einzelne finite Elemente unterteilt.

Insbesondere bei Zug- und Druckspannungen entstehen am Rand der Klebstoffschicht 2 hohe Spitzenwerte, die zum Versagen führen können. Aufgrund des Gebrauchs struktureller Klebstoffe mit hohem E-Modul in Verbindung mit hohen Spitzenspannungen besitzen die zugehörigen Klebstoffschichten eine kritische Stelle am Rand der Verklebung. Da dies einen begrenzenden Faktor darstellt, kann die Klebeverbindung nicht beliebig skaliert werden und deren Tragfähigkeit steigt unterproportional zur Überlappungslänge. Durch Erhöhen der Überlappungslänge und folglich auch der Klebstoffmenge wird deshalb nur eine geringfügig höhere Tragfähigkeit erreicht. Es resultieren widersprüchliche Anforderungen an die Klebeverbindung, die durch zusätzliche mechanische Kraftschlussverbindungen kompensiert werden. Folglich sind der Material- und Montageaufwand und der damit verbundene Kostenaufwand relativ hoch. Das Versagen der Klebeverbindung kann ferner zu sicherheitskritischen Problemen der kompletten Konstruktion führen.

Ferner ist aus US 2003/0113724 A1 ein Verfahren zum Bonden eines Microarrays in eine Microarray-Einheit bekannt.

Weiterhin ist aus DE 103 47 652 A1 eine Klebeverbindung von mindestens zwei Fügepartnern, die unterschiedliche Materialien umfassen, bekannt.

Aus DE 10 2004 009880 A1 ist zudem eine Klebekonstruktion für ein an eine Grundstruktur zu montierendes Bauteil, insbesondere einem Glaselement, mit einer Primärklebung und einer Sekundärklebung bekannt.

Es ist Aufgabe vorliegender Erfindung eine geklebte Anordnung, vorzugsweise für ein Kraftfahrzeug, anzugeben, die bei einfacher Herstellung und effizientem Einsatz der Klebstoffmenge eine dauerfeste Verbindung ermöglicht.

Die Lösung der Aufgabe erfolgt durch die Merkmale des unabhängigen Anspruchs. Die abhängigen Ansprüche haben vorteilhafte Ausgestaltungen der Erfindung zum Gegenstand.

Somit wird die Aufgabe gelöst durch eine geklebte Anordnung. Die geklebte Anordnung wird vorteilhafterweise in einem Kraftfahrzeug verwendet. Dabei kann es sich beispielsweise um geklebte Bauteile der Karosserie oder des Fahrwerks handeln. Die erfindungsgemäße Anordnung umfasst ein erstes Bauteil und ein zweites Bauteil sowie zumindest eine Klebstoffschicht zum Verbinden der beiden Bauteile. Die beiden Bauteile sind vorteilhafterweise aus faserverstärktem Kunststoff. Alternativ können die Bauteile auch aus einfachem Kunststoff oder Metall sein. Es ist auch vorgesehen, dass die beiden Bauteile aus unterschiedlichen Materialien sind. Die beiden Bauteile sind mit der Klebstoffschicht direkt miteinander verbunden, sodass beide Bauteile die Klebstoffschicht berühren.

Erfindungsgemäß ist vorgesehen, dass die Klebstoffschicht eine Mittelzone und eine die Mittelzone umgebende Randzone umfasst. Beide Bauteile stehen sowohl mit der Mittelzone als auch mit der Randzone in Kontakt. Im ausgehärteten Zustand des Klebstoffes weist die Randzone eine höhere Elastizität auf als die Mittelzone. Der E-Modul in der Randzone ist somit niedriger als der E-Modul in der Mittelzone.

Durch die unterschiedlichen Elastizitäten in der Randzone und in der Mittelzone reduzieren sich die Spitzenspannungen am Rand der Klebstoffschicht infolge der gleichmäßigen Verteilung der Spannung über die Klebefläche. Ferner wird dessen Tragfähigkeit verbessert, was sich positiv auf die Betriebsfestigkeit und den Ausschöpfungsgrad des Materialverbrauchs auswirkt. Daher kann, je nach Anwendungsfall die Verwendung zusätzlicher kraftschlüssige Verbindungselemente obsolet werden. Es resultiert ein geringeres Gewicht der Anordnung, ein verringerter Material- und Montageaufwand und die damit einhergehenden Kosten werden reduziert. Darüber hinaus ist eine annähernd beliebige Skalierung der Klebeverbindung über die Überlappungslänge möglich. Durch die bessere Klebung wird die Sicherheit gegen Versagen bei Spitzenspannungen erhöht. Folglich reduziert sich auch die Wahrscheinlichkeit des Versagens der ganzen Konstruktion und die Sicherheit für involvierte Personen wird erhöht.

Grundsätzlich können für die Klebstoffschicht, sowohl in der Mittelzone als auch in der Randzone, beliebige Klebstoffe verwendet werden. Dabei können zum Beispiel 2-Komponenten-Klebstoffe (mit Binder und Härter), wärmeaushärtende Klebstoffe oder UV-aushärtende Klebstoffe verwendet werden.

Gemäß einer bevorzugten Ausführung ist vorgesehen, dass die Mittelzone und die Randzone aus zwei unterschiedlichen Klebstoffen bestehen. Dabei können je nach Anwendungsfall die passenden Klebstoffe gewählt werden so das im ausgehärteten Zustand die Elastizität in der Randzone höher ist als in der Mittelzone. Beispielsweise wird für die Mittelzone ein 2-Komponenten-Klebstoff auf Polyurethanbasis verwendet. Die Klebstoffe für die Randzone sind elastische Klebstoffe (niedrige Steifigkeiten von 2 bis 50 MPa oder mittlere Steifigkeiten von 50 bis 200 MPa) mit hoher Bruchdehnung bzw. Verformung, um möglich große Spitzenspannung bzw. hohe Dehnung in der Randzone zu verringern. Beispielsweise Scheiben klebstoffe können hier verwendet werden.

Alternativ zur Verwendung von zwei unterschiedlichen Klebstoffen für die Mittelzone und die Randzone kann auch derselbe Klebstoff verwendet werden, wobei die Mittelzone und die Randzone unterschiedlich stark ausgehärtet werden.

Die Methode der unterschiedlichen Aushärtung in der Randzone und in der Mittelzone kann auch angewendet werden, wenn zwei unterschiedliche Klebstoffe in den Zonen verwendet werden.

Bevorzugt wird für die Randzone weniger und/oder ein anderer Härter verwendet. Zusätzlich oder alternativ ist es möglich die Mittelzone stärker zu erwärmen und/oder stärker mit UV-Licht zu bestrahlen, sodass hier eine stärkere Aushärtung stattfindet. Dabei ist auch vorgesehen, beispielsweise Wärmeleitelemente oder Lichtleiter in die Klebstoffschicht mit einzulegen, um dadurch lokal die Aushärtung zu beeinflussen.

Je nach auftretender Belastung der Anordnung wird die Randzone vollumfänglich um die Mittelzone oder nur an bestimmten Stellen ausgebildet. Es ist bevorzugt vorgesehen, dass die Randzone an zumindest 30 %, vorzugsweise zumindest 50 %, besonders vorzugsweise zumindest 70 %, des Umfangs der Mittelzone angeordnet ist. Eine besonders bevorzugte Ausgestaltung sieht eine vollumfängliche Anordnung (100%) der Randzone vor.

Bevorzugt ist vorgesehen, dass die Randzone unmittelbar an die Mittelzone angrenzt. Es gibt somit keine Lücke zwischen der Randzone der Mittelzone.

Die Randzone sollte ausreichend groß sein, um im Randbereich eine elastische Klebeverbindung zu ermöglichen. Allerdings sollte auch ausreichend Fläche für die Mittelzone und somit für den relativ harten Bereich der Klebstoffschicht zur Verfügung stehen. Es wird ein Quotient Q (Q=F/G) definiert, mit der Fläche F der Randzone und der Gesamtfläche G der Klebstoffschicht (Randzone + Mittelzone). Die Untergrenze des Quotienten Q liegt bei zumindest 0,01, vorzugsweise zumindest 0,05. Die Obergrenze des Quotienten Q liegt bei maximal 0,4, besonders vorzugsweise maximal 0,3.

Der E-Modul der Mittelzone beträgt zumindest 120 %, vorzugsweise zumindest 150 %, besonders vorzugsweise zumindest 200 %, des E-Moduls der Randzone.

Die beiden verklebten Bauteile sind vorteilhafterweise flächige Bauteile die in einem Überlappungsbereich verklebt sind. Eine relevante Belastung der Klebstoffschicht bildet somit eine Scherbelastung. Die Zugscherfestigkeit der Mittelzone beträgt vorteilhafterweise zumindest 120 %, vorzugsweise zumindest 150 %, besonders vorzugsweise zumindest 200 %, der Zugscherfestigkeit der Randzone. Die Zugscherfestigkeit wird dabei insbesondere nach DIN EN 1465:2009-07 bestimmt.

Die Erfindung umfasst des Weiteren ein Verfahren zur Herstellung der soeben beschriebenen Anordnung. Das Verfahren umfasst die folgenden Schritte:
(i) Aufbringen der Klebstoffschicht mit der Mittelzone und der die Mittelzone umgebenden Randzone. Insbesondere werden dabei die Klebstoffe für beide Zonen aufgebracht bevor die Bauteile übereinander gelegt werden. Die Randzone wird also vorteilhafterweise nicht nachträglich zwischen die beiden Bauteile eingespritzt.
(ii) Verwenden unterschiedliche Klebstoffe für die Mittelzone und die Randzone und/oder unterschiedliches Aushärten des Klebstoffes in der Mittelzone und der Randzone, sodass die Randzone eine höhere Elastizität aufweist als die Mittelzone.

Für die unterschiedliche Aushärtung in der Randzone und in der Mittelzone wird vorteilhafterweise eine unterschiedliche Menge an Härter und/oder ein unterschiedlicher Härter verwendet. Zusätzlich oder alternativ können die Randzone und die Mittelzone unterschiedlich erwärmt werden. Zusätzlich oder alternativ ist vorgesehen, die Randzone und die Mittelzone unterschiedlich mit UV-Licht zu behandeln, um so eine unterschiedliche Aushärtung zu erreichen.

Die Erfindung umfasst des Weiteren ein Kraftfahrzeug umfassend zumindest eine der beschriebenen geklebten Anordnungen. Bei den beiden Bauteilen handelt es sich dabei insbesondere um faserverstärkte Kunststoffe, die in der Karosserie oder dem Fahrwerk verwendet werden.

Weitere Einzelheiten, Merkmale und Vorteile der Erfindung ergeben sich aus der nachfolgenden Beschreibung und den Figuren. Es zeigen:
- Figur 1: eine schematische Schnittansicht einer erfindungsgemäßen geklebten Anordnung gemäß einem Ausführungsbeispiel,
- Figur 2: eine schematische Draufsicht der Klebstoffschicht der erfindungsgemäßen geklebten Anordnung gemäß dem Ausführungsbeispiel, und
- Figur 3: eine Anordnung nach dem Stand der Technik.

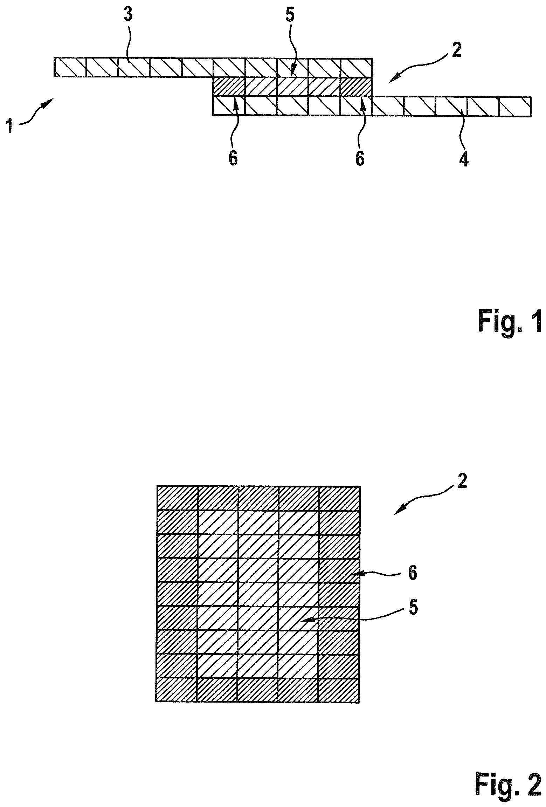

Die Figuren 1 und 2 zeigen eine Anordnung 1 mit einem ersten Bauteil 3 und einem zweiten Bauteil 4. Die beiden Bauteile 3, 4 überlappen. Im Überlappungsbereich sind die beiden Bauteile 3, 4 mittels einer Klebstoffschicht 2 miteinander verbunden.

Lediglich zur Erklärung der Erfindung sind in den Figuren die Bauteile 3, 4 und die Klebstoffschicht 2 in finite Elemente unterteilt.

Figur 1 zeigt eine schematische Schnittansicht der Anordnung 1. Figur 2 zeigt eine schematische Draufsicht der Klebstoffschicht 2.

Die Klebstoffschicht 2 ist unterteilt in eine Mittelzone 5 und eine Randzone 6. Die Randzone 6 umgibt im gezeigten Beispiel vollumfänglich die Mittelzone 5. Der verwendete Klebstoff in der Mittelzone 5 weist eine geringere Elastizität auf als in der Randzone 6. Wie bereits beschrieben, können für diesen Effekt unterschiedliche Klebstoffe in der Mittelzone 5 und in der Randzone 6 verwendet werden. Alternativ oder zusätzlich können die Klebstoffe in der Mittelzone 5 und in der Randzone 6 unterschiedlich ausgehärtet werden.

Wie eine Betrachtung der Anordnung 100 nach dem Stand der Technik in Figur 3 zeigt, treten in der Randzone 6 bei einer Zugbelastung die größten Spannungen auf. Da erfindungsgemäß in der Randzone 6 eine relativ elastische Verklebung gewählt wird, können diese Spitzenspannungen ohne Bauteilversagen aufgenommen werden.

### Bezugszeichenliste:

- 1: geklebte Anordnung
- 2: Klebstoffschicht
- 3: erstes Bauteil
- 4: zweites Bauteil
- 5: Mittelzone
- 6: Randzone
- 7: Kraft
- 100: geklebte Anordnung nach dem Stand der Technik

## Patentansprüche

1. Geklebte Anordnung (1), vorzugsweise für ein Kraftfahrzeug, umfassend ein erstes Bauteil (3), ein zweites Bauteil (4), und zumindest eine Klebstoffschicht (2) zum Verbinden der beiden Bauteile (3, 4),
• wobei die Klebstoffschicht (2) eine Mittelzone (5) und eine die Mittelzone (5) umgebende Randzone (6) umfasst,
• wobei im ausgehärteten Zustand der Klebstoff in der Randzone (6) eine höhere Elastizität aufweist als der Klebstoff in der Mittelzone (5), und
• wobei beide Bauteile (3, 4) sowohl mit der Mittelzone (5) als auch mit der Randzone (6) in Kontakt stehen,
**gekennzeichnet durch** einen Quotienten (Q=F/G) aus der Fläche (F) der Randzone (6) und der Gesamtfläche (G) der Klebstoffschicht (2),
• wobei die Untergrenze des Quotienten (Q) bei zumindest 0,01, vorzugsweise zumindest 0,05, liegt,
• wobei die Obergrenze des Quotienten (Q) bei maximal 0,4, besonders vorzugsweise maximal 0,3, liegt, und
• wobei der E-Modul der Mittelzone (5) zumindest 120 %, vorzugsweise zumindest 150 %, besonders vorzugsweise zumindest 200 %, des E-Moduls der Randzone (6) beträgt.

2. Geklebte Anordnung nach Anspruch 1, **dadurch gekennzeichnet, dass** die Mittelzone (5) und die Randzone (6) aus zwei unterschiedlichen Klebstoffen bestehen, oder dass die Mittelzone (5) und die Randzone (6) aus demselben Klebstoff bestehen.

3. Geklebte Anordnung nach einem der vorhergehenden Ansprüche, **dadurch gekennzeichnet, dass** die Mittelzone (5) stärker ausgehärtet ist als die Randzone (6).

4. Geklebte Anordnung nach einem der vorhergehenden Ansprüche, **dadurch gekennzeichnet, dass** die Randzone (6) an zumindest 30 %, vorzugsweise zumindest 50 %, besonders vorzugsweise zumindest 70 %, besonders bevorzugt 100%, des Umfangs der Mittelzone (5) angeordnet ist.

5. Geklebte Anordnung nach einem der vorhergehenden Ansprüche, **dadurch gekennzeichnet, dass** die Randzone (6) unmittelbar an die Mittelzone (5) angrenzt.

6. Geklebte Anordnung nach einem der vorhergehenden Ansprüche, **dadurch gekennzeichnet, dass** die Zugscherfestigkeit der Mittelzone (5) zumindest 120 %, vorzugsweise zumindest 150 %, besonders vorzugsweise zumindest 200 %, der Zugscherfestigkeit der Randzone (6) beträgt.

7. Verfahren zur Herstellung einer geklebten Anordnung (1) nach einem der vorhergehenden Ansprüche, **gekennzeichnet durch** die folgenden Schritte:
• Aufbringen der Klebstoffschicht (2) mit der Mittelzone (5) und der die Mittelzone (5) umgebenden Randzone (6),
• wobei für die Mittelzone (5) und für die Randzone (6) unterschiedliche Klebstoffe verwendet werden und/oder wobei der Klebstoff unterschiedlich ausgehärtet wird, sodass die Randzone (6) eine höhere Elastizität aufweist als die Mittelzone (5).

8. Verfahren nach Anspruch 7, **dadurch gekennzeichnet, dass** für die unterschiedliche Aushärtung eine unterschiedliche Menge an Härter verwendet wird, und/oder die Randzone (6) und die Mittelzone (5) unterschiedlich erwärmt werden, und/oder die Randzone (6) und die Mittelzone (5) unterschiedlich mit UV-Licht behandelt werden.

## Claims

1. Glued arrangement (1), preferably for a motor vehicle, comprising a first component (3), a second component (4), as well as at least one adhesive layer (2) for connecting the two components (3, 4),
• wherein the central layer (2) comprises a central zone (5) and an edge zone (6) surrounding the central zone (5),
• wherein in the hardened state the adhesive in the edge zone (6) has a greater elasticity than the adhesive in the central zone (5), and
• wherein both components (3, 4) are in contact both with the central zone (5) and with the edge zone (6),
**characterized by** a quotient (Q=F/G) of the area (F) of the edge zone (6) and the total area (G) of the adhesive layer (2),
• wherein the lower limit of the quotient (Q) is at least 0.01, preferably at least 0.05,
• wherein the upper limit of the quotient (Q) is at most 0.4, especially preferably at most 0.3, and
• wherein the E modulus of the central zone (5) is at least 120%, preferably at least 150%, especially preferably at least 200%, of the E modulus of the edge zone (6).

2. Glued arrangement according to Claim 1, **characterized in that** the central zone (5) and the edge zone (6) consist of two different adhesives, or **in that** the central zone (5) and the edge zone (6) consist of the same adhesive.

3. Glued arrangement according to one of the preceding claims, **characterized in that** the central zone (5) is more hardened than the edge zone (6).

4. Glued arrangement according to one of the preceding claims, **characterized in that** the edge zone (6) is arranged at least 30%, preferably at least 50%, especially preferably at least 70%, especially preferably 100%, around the periphery of the central zone (5).

5. Glued arrangement according to one of the preceding claims, **characterized in that** the edge zone (6) is directly adjacent to the central zone (5).

6. Glued arrangement according to one of the preceding claims, **characterized in that** the tensile shear strength of the central zone (5) is at least 120%, preferably at least 150%, especially preferably at least 200%, of the tensile shear strength of the edge zone (6).

7. Method for making a glued arrangement (1) according to one of the preceding claims, **characterized by** the following steps:
• application of the adhesive layer (2) with the central zone (5) and the edge zone (6) surrounding the central zone (5),
• wherein different adhesives are used for the central zone (5) and for the edge zone (6) and/or wherein the adhesive has different hardening, so that the edge zone (6) has a greater elasticity than the central zone (5).

8. Method according to Claim 7, **characterized in that** for the different hardening a different quantity of hardener is used, and/or the edge zone (6) and the central zone (5) are heated differently, and/or the edge zone (6) and the central zone (5) are treated differently with UV light.

## Revendications

1. Ensemble collé (1) destiné de préférence à un véhicule automobile et comprenant un premier composant (3), un deuxième composant (4), et au moins une couche d'adhésif (2) destinée à lier les deux composants (3, 4),
• la couche adhésive (2) comportant une zone centrale (5) et une zone de bord (6) entourant la zone centrale (5),
• à l'état durci l'adhésif situé dans la zone de bord (6) présentant une élasticité supérieure à celle de l'adhésif situé dans la zone centrale (5), et
• les deux composants (3, 4) étant en contact à la fois avec la zone centrale (5) et la zone de bord (6), **caractérisé par** un quotient (Q = F/G) de la surface (F) de la zone de bord (6) et de la surface totale (G) de la couche d'adhésif (2),
• la limite inférieure du quotient (Q) étant d'au moins 0,01, de préférence d'au moins 0,05,
• la limite supérieure du quotient (Q) étant de 0,4 maximum, de manière particulièrement préférée de 0,3 maximum, et
• le module d'élasticité de la zone centrale (5) représentant au moins 120 %, de préférence au moins 150 %, de manière particulièrement préférée au moins 200 %, du module d'élasticité de la zone de bord (6).

2. Ensemble collé selon la revendication 1, **caractérisé en ce que** la zone centrale (5) et la zone de bord (6) comprennent deux adhésifs différents, ou **en ce que** la zone centrale (5) et la zone de bord (6) comprennent le même adhésif.

3. Ensemble collé selon l'une des revendications précédentes, **caractérisé en ce que** la zone centrale (5) est plus fortement durcie que la zone de bord (6).

4. Ensemble collé selon l'une des revendications précédentes, **caractérisé en ce que** la zone de bord (6) est disposée sur au moins 30 %, de préférence au moins 50 %, de manière particulièrement avantageuse au moins 70 %, de manière particulièrement préférée 100 %, de la circonférence de la zone centrale (5).

5. Ensemble collé selon l'une des revendications précédentes, **caractérisé en ce que** la zone de bord (6) est directement adjacente à la zone centrale (5).

6. Ensemble collé selon l'une des revendications précédentes, **caractérisé en ce que** la résistance au cisaillement en traction de la zone centrale (5) représente au moins 120 %, de préférence au moins 150 %, de manière particulièrement avantageuse au moins 200 %, de la résistance au cisaillement en traction de la zone de bord (6).

7. Procédé de réalisation d'un ensemble collé (1) selon l'une des revendications précédentes, **caractérisé par** les étapes suivantes :
• appliquer la couche adhésive (2) avec la zone centrale (5) et la zone de bord (6) entourant la zone centrale (5),
• des adhésifs différents étant utilisés pour la zone centrale (5) et pour la zone de bord (6) et/ou l'adhésif étant durci différemment de sorte que la zone de bord (6) présente une élasticité supérieure à celle de la zone centrale (5).

8. Procédé selon la revendication 7, **caractérisé en ce qu'**une quantité différente de durcisseur est utilisée pour le durcissement différent, et/ou la zone de bord (6) et la zone centrale (5) étant chauffées différemment, et/ou la zone de bord (6) et la zone centrale (5) pouvant être traitées différemment avec de la lumière UV.
